# EUROPEAN PATENT APPLICATION

(11) **EP 4 629 639 A1**
(43) Date of publication of application: **08.10.2025**
(21) Application number: 24305537.3
(22) Date of filing: 05.04.2024
(51) Int. Cl.: H04N 21/234, H04N 21/44, H04N 21/81

(54) **3D GAUSSIANS SPLATTING IN SCENE DESCRIPTION**

(71) Applicant: InterDigital CE Patent Holdings, SAS, 75017 Paris (FR)
(72) Inventor: AVRIL, Quentin, 35830 BETTON (FR); COVA REGATEIRO, João Pedro, 35220 CHATEAUBOURG (FR); LE CLERC, Francois, 35590 L'HERMITAGE (FR); GOSSELIN, Philippe Henri, 35235 THORIGNE-FOUILLARD (FR)
(74) Representative: Vossius & Partner Patentanwälte Rechtsanwälte mbB

(57) **Abstract**

Some embodiments of a method may include: obtaining information for a three-dimensional (3D) Gaussian model corresponding to a 3D scene, wherein the information comprises a set of attributes of the 3D Gaussian model; parsing the information for a first attribute of the set of attributes, wherein the first attribute corresponds to a position of the 3D Gaussian model; parsing the information for a second attribute of the set of attributes, wherein the second attribute corresponds to a color of the 3D Gaussian model; parsing the information for a third attribute of the set of attributes, wherein the third attribute corresponds to a covariance of the 3D Gaussian model; and rendering the 3D scene using the parsed attributes of the 3D Gaussian model.

## Description

### BACKGROUND

Various technologies are available for generating, processing, and rendering virtual three-dimensional (3D) scenes. The information characterizing a 3D scene, referred to as a scene description, may be time-dependent, allowing a 3D scene to change in a manner analogous to playback of a video. This kind of behavior may be achieved by relying on the framework defined in the Scene Description for MPEG media document, Information technology - Coded representation of immersive media - Part 14: Scene Description for MPEG media, ISO/IEC DIS 23090-14 :2021 (E). A scene update mechanism based on the JSON Patch protocol as defined in IETF RFC 6902 may be used to synchronize virtual content to MPEG media streams.

### SUMMARY

An example method in accordance with some embodiments may include: obtaining information for a three-dimensional (3D) Gaussian model corresponding to a 3D scene, wherein the information comprises a set of attributes of the 3D Gaussian model; parsing the information for a first attribute of the set of attributes, wherein the first attribute corresponds to a position of the 3D Gaussian model; parsing the information for a second attribute of the set of attributes, wherein the second attribute corresponds to a color of the 3D Gaussian model; parsing the information for a third attribute of the set of attributes, wherein the third attribute corresponds to a covariance of the 3D Gaussian model; and rendering the 3D scene using the parsed attributes of the 3D Gaussian model. In some embodiments, the information is encoded into a bitstream. In some embodiments, the information is decoded from a bitstream.

For some embodiments of the example method, the first attribute corresponds to x, y, and z positions in space.

For some embodiments of the example method, the first attribute comprises at least 12 bytes of position data in the obtained information.

For some embodiments of the example method, the second attribute corresponds to color values associated with the 3D Gaussian model.

For some embodiments of the example method, the color values are spherical harmonic coefficients associated with the 3D Gaussian model.

For some embodiments of the example method, the second attribute comprises a property of a gITF extension-based object.

For some embodiments of the example method, the second attribute comprises a transparency value associated with the 3D Gaussian.

For some embodiments of the example method, the third attribute comprises a 3x3 matrix of covariance values associated with the 3D Gaussian.

For some embodiments of the example method, the third attribute comprises at least 36 bytes of covariance data in the obtained information.

For some embodiments of the example method, the obtained information corresponds to a gITF data structure.

For some embodiments of the example method, the covariance attribute corresponding to the third attribute is stored within a gITF primitive data structure element.

For some embodiments of the example method, the covariance attribute corresponding to the third attribute is stored within an extension element that extends a gITF primitive data structure element.

For some embodiments of the example method, the obtained information comprises a mode primitive data structure element.

For some embodiments of the example method, the mode primitive data structure element indicates that the obtained information corresponds to 3D Gaussian model data.

An example apparatus in accordance with some embodiments may include: a processor; and a non-transitory computer-readable medium storing instructions operative, when executed by the processor, to cause the apparatus to perform any one of the methods listed above.

### BRIEF DESCRIPTION OF THE DRAWINGS

FIG. 1A is a system diagram illustrating an example set of interfaces for a system according to some embodiments.
FIG. 1B is a system diagram illustrating an example set of interfaces for a scene description (stored as an item in gITF.json), three video tracks, an audio track, and a JSON patch update track in an ISOBMFF file according to some embodiments.
FIG. 1C is a system diagram illustrating an example set of interfaces for an MPEG-I node hierarchy supporting elements of scene interactivity according to some embodiments.
FIG. 2A is a schematic illustration showing an example set of Gaussians.
FIG. 2B is an illustration showing an example rendering of a sample scene.
FIG. 3 is a bitfield diagram showing an example encoding of a Gaussian in a buffer according to some embodiments.
FIG. 4 is a bitfield diagram showing an example encoding of multiple Gaussians in a buffer according to some embodiments.
FIGs. 5A-5B form a code listing of an example data structure that includes a covariance attribute according to some embodiments.
FIG. 6 is a schematic illustration showing an example of an encoded Gaussian according to some embodiments.
FIGs. 7A-7B form a code listing of an example data structure that includes a covariance attribute according to some embodiments.
FIGs. 8A-8B form a code listing of an example data structure that includes a covariance attribute according to some embodiments.
FIG. 9 is a flowchart illustrating an example process for processing attributes according to some embodiments.
FIG. 10 is a flowchart illustrating an example process for processing attributes according to some embodiments.
FIG. 11 is a flowchart illustrating an example process for parsing and rendering a 3D Gaussian model according to some embodiments.
FIG. 12 is a schematic plan view illustrating example relationships of extended reality scene description objects according to some embodiments.

The entities, connections, arrangements, and the like that are depicted in-and described in connection with-the various figures are presented by way of example and not by way of limitation. As such, any and all statements or other indications as to what a particular figure "depicts," what a particular element or entity in a particular figure "is" or "has," and any and all similar statements-that may in isolation and out of context be read as absolute and therefore limiting-may only properly be read as being constructively preceded by a clause such as "in at least one embodiment, ...." For brevity and clarity of presentation, this implied leading clause is not repeated *ad nauseum* in the detailed description.

### DETAILED DESCRIPTION

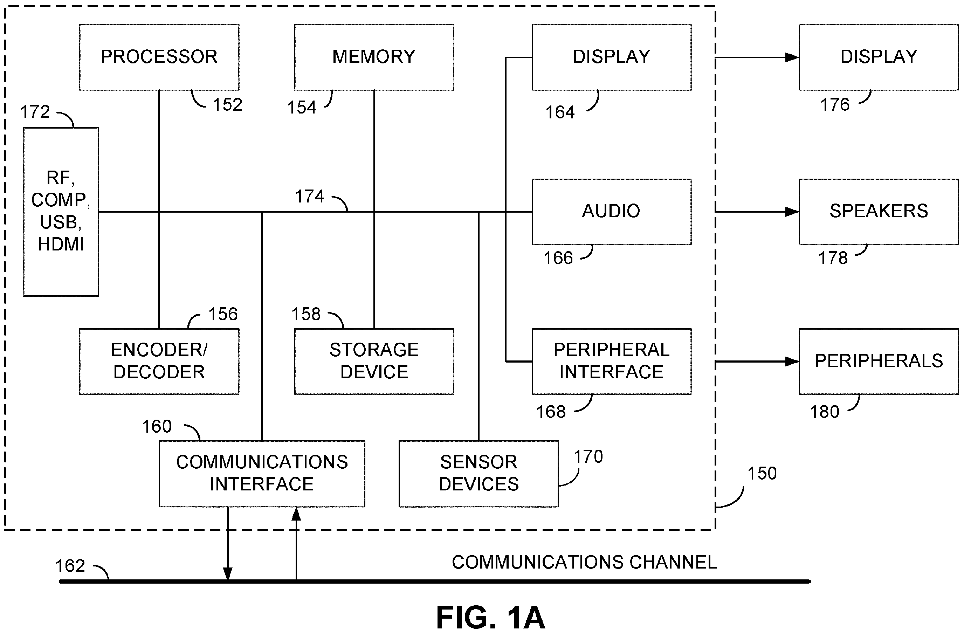

FIG. 1A is a system diagram illustrating an example set of interfaces for a system according to some embodiments. An extended reality display device, together with its control electronics, may be implemented for some embodiments. System 150 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 150, singly or in combination, can be embodied in a single integrated circuit (IC), multiple ICs, and/or discrete components. For example, in at least one embodiment, the processing and encoder/decoder elements of system 150 are distributed across multiple ICs and/or discrete components. In various embodiments, the system 150 is communicatively coupled to one or more other systems, or other electronic devices, via, for example, a communications bus or through dedicated input and/or output ports. In various embodiments, the system 150 is configured to implement one or more of the aspects described in this document.

The system 150 includes at least one processor 152 configured to execute instructions loaded therein for implementing, for example, the various aspects described in this document. Processor 152 may include embedded memory, input output interface, and various other circuitries as known in the art. The system 150 includes at least one memory 154 (e.g., a volatile memory device, and/or a non-volatile memory device). System 150 may include a storage device 158, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 158 can include an internal storage device, an attached storage device (including detachable and non-detachable storage devices), and/or a network accessible storage device, as non-limiting examples.

System 150 includes an encoder/decoder module 156 configured, for example, to process data to provide an encoded video or decoded video, and the encoder/decoder module 156 can include its own processor and memory. The encoder/decoder module 156 represents module(s) that can be included in a device to perform the encoding and/or decoding functions. As is known, a device can include one or both of the encoding and decoding modules. Additionally, encoder/decoder module 156 can be implemented as a separate element of system 150 or can be incorporated within processor 152 as a combination of hardware and software as known to those skilled in the art.

Program code to be loaded onto processor 152 or encoder/decoder 156 to perform the various aspects described in this document can be stored in storage device 158 and subsequently loaded onto memory 154 for execution by processor 152. In accordance with various embodiments, one or more of processor 152, memory 154, storage device 158, and encoder/decoder module 156 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 152 and/or the encoder/decoder module 156 is used to store instructions and to provide working memory for processing that is needed during encoding or decoding. In other embodiments, however, a memory external to the processing device (for example, the processing device can be either the processor 152 or the encoder/decoder module 152) is used for one or more of these functions. The external memory can be the memory 154 and/or the storage device 158, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 150 can be provided through various input devices as indicated in block 172. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1A, include composite video.

In various embodiments, the input devices of block 172 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 150 to other electronic devices across USB and/or HDMI connections. It is to be understood that various aspects of input processing, for example, Reed-Solomon error correction, can be implemented, for example, within a separate input processing IC or within processor 152 as necessary. Similarly, aspects of USB or HDMI interface processing can be implemented within separate interface ICs or within processor 152 as necessary. The demodulated, error corrected, and demultiplexed stream is provided to various processing elements, including, for example, processor 152, and encoder/decoder 156 operating in combination with the memory and storage elements to process the datastream as necessary for presentation on an output device.

Various elements of system 150 can be provided within an integrated housing, Within the integrated housing, the various elements can be interconnected and transmit data therebetween using suitable connection arrangement 174, for example, an internal bus as known in the art, including the Inter-IC (I2C) bus, wiring, and printed circuit boards.

The system 150 includes communication interface 160 that enables communication with other devices via communication channel 162. The communication interface 160 can include, but is not limited to, a transceiver configured to transmit and to receive data over communication channel 162. The communication interface 160 can include, but is not limited to, a modem or network card and the communication channel 162 can be implemented, for example, within a wired and/or a wireless medium.

Data is streamed, or otherwise provided, to the system 150, in various embodiments, using a wireless network such as a Wi-Fi network, for example IEEE 802.11 (IEEE refers to the Institute of Electrical and Electronics Engineers). The Wi-Fi signal of these embodiments is received over the communications channel 162 and the communications interface 160 which are adapted for Wi-Fi communications. The communications channel 162 of these embodiments is typically connected to an access point or router that provides access to external networks including the Internet for allowing streaming applications and other over-the-top communications. Other embodiments provide streamed data to the system 150 using a set-top box that delivers the data over the HDMI connection of the input block 172. Still other embodiments provide streamed data to the system 150 using the RF connection of the input block 172. As indicated above, various embodiments provide data in a non-streaming manner. Additionally, various embodiments use wireless networks other than Wi-Fi, for example a cellular network or a Bluetooth network.

The system 150 can provide an output signal to various output devices, including a display 176, speakers 178, and other peripheral devices 180. The display 176 of various embodiments includes one or more of, for example, a touchscreen display, an organic light-emitting diode (OLED) display, a curved display, and/or a foldable display. The display 176 can be for a television, a tablet, a laptop, a cell phone (mobile phone), or other device. The display 176 can also be integrated with other components (for example, as in a smart phone), or separate (for example, an external monitor for a laptop). The other peripheral devices 180 include, in various examples of embodiments, one or more of a stand-alone digital video disc (or digital versatile disc) (DVR, for both terms), a disk player, a stereo system, and/or a lighting system. Various embodiments use one or more peripheral devices 180 that provide a function based on the output of the system 150. For example, a disk player performs the function of playing the output of the system 150.

In various embodiments, control signals are communicated between the system 150 and the display 176, speakers 178, or other peripheral devices 180 using signaling such as AV.Link, Consumer Electronics Control (CEC), or other communications protocols that enable device-to-device control with or without user intervention. The output devices can be communicatively coupled to system 150 via dedicated connections through respective interfaces 164, 166, and 168. Alternatively, the output devices can be connected to system 150 using the communications channel 162 via the communications interface 160. The display 176 and speakers 178 can be integrated in a single unit with the other components of system 150 in an electronic device such as, for example, a television. In various embodiments, the display interface 164 includes a display driver, such as, for example, a timing controller (T Con) chip.

The display 176 and speaker 178 can alternatively be separate from one or more of the other components, for example, if the RF portion of input 172 is part of a separate set-top box. In various embodiments in which the display 176 and speakers 178 are external components, the output signal can be provided via dedicated output connections, including, for example, HDMI ports, USB ports, or COMP outputs.

The system 150 may include one or more sensor devices 168. Examples of sensor devices that may be used include one or more GPS sensors, gyroscopic sensors, accelerometers, light sensors, cameras, depth cameras, microphones, and/or magnetometers. Such sensors may be used to determine information such as user's position and orientation. Where the system 150 is used as the control module for an extended reality display (such as control modules 124, 132), the user's position and orientation may be used in determining how to render image data such that the user perceives the correct portion of a virtual object or virtual scene from the correct point of view. In the case of head-mounted display devices, the position and orientation of the device itself may be used to determine the position and orientation of the user for the purpose of rendering virtual content. In the case of other display devices, such as a phone, a tablet, a computer monitor, or a television, other inputs may be used to determine the position and orientation of the user for the purpose of rendering content. For example, a user may select and/or adjust a desired viewpoint and/or viewing direction with the use of a touch screen, keypad or keyboard, trackball, joystick, or other input. Where the display device has sensors such as accelerometers and/or gyroscopes, the viewpoint and orientation used for the purpose of rendering content may be selected and/or adjusted based on motion of the display device.

The embodiments can be carried out by computer software implemented by the processor 152 or by hardware, or by a combination of hardware and software. As a non-limiting example, the embodiments can be implemented by one or more integrated circuits. The memory 154 can be of any type appropriate to the technical environment and can be implemented using any appropriate data storage technology, such as optical memory devices, magnetic memory devices, semiconductor-based memory devices, fixed memory, and removable memory, as non-limiting examples. The processor 152 can be of any type appropriate to the technical environment, and can encompass one or more of microprocessors, general purpose computers, special purpose computers, and processors based on a multi-core architecture, as non-limiting examples.

### Scene Description Framework for XR

The present principles generally relate to the domain of rendering of extended reality scene description and extended reality rendering. The present document is also understood in the context of the formatting and the playing of extended reality applications when rendered on end-user devices such as mobile devices or Head-Mounted Displays (HMD).

In XR applications, a scene description is used to combine explicit and easy-to-parse description of a scene structure and some binary representations of media content.

In time-based media streaming, the scene description itself can be time-evolving to provide the relevant virtual content for each sequence of a media stream. For instance, for advertising purpose, a virtual bottle can be displayed during a video sequence where people are drinking.

This kind of behavior can be achieved by relying on the framework defined in the Scene Description for MPEG media document, Information technology - Coded representation of immersive media - Part 14: Scene Description for MPEG media, ISO/IEC DIS 23090-14 :2021 (E). A scene update mechanism based on the JSON Patch protocol as defined in IETF RFC 6902 may be used to synchronize virtual content to MPEG media streams.

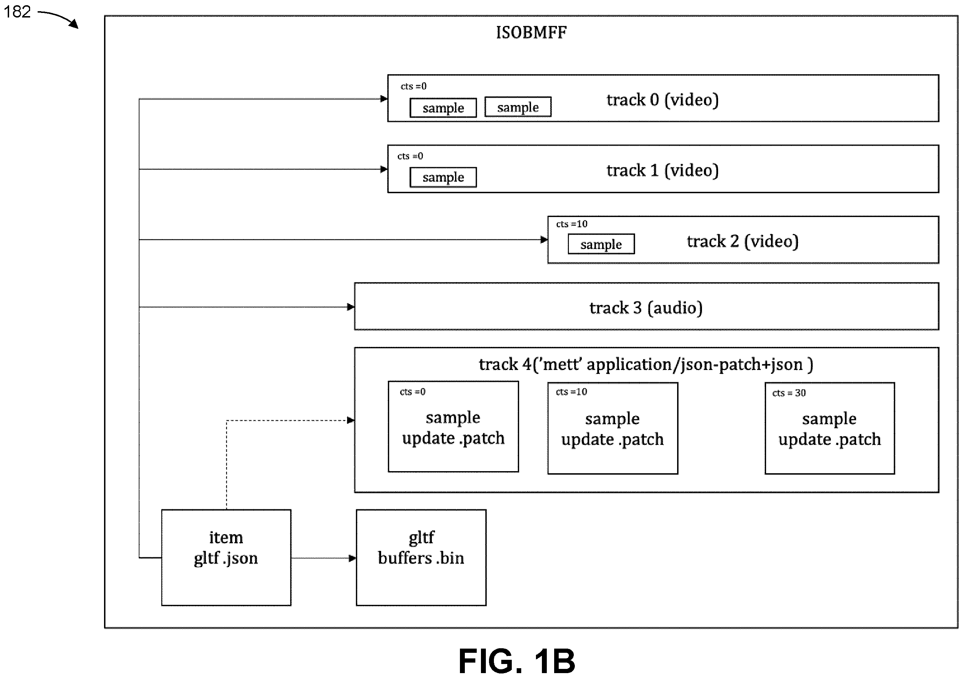

FIG. 1B is a system diagram illustrating an example set of interfaces for a scene description (stored as an item in gITF.json), three video tracks, an audio track, and a JSON patch update track in an ISOBMFF file 182 according to some embodiments.

### Runtime Interactivity

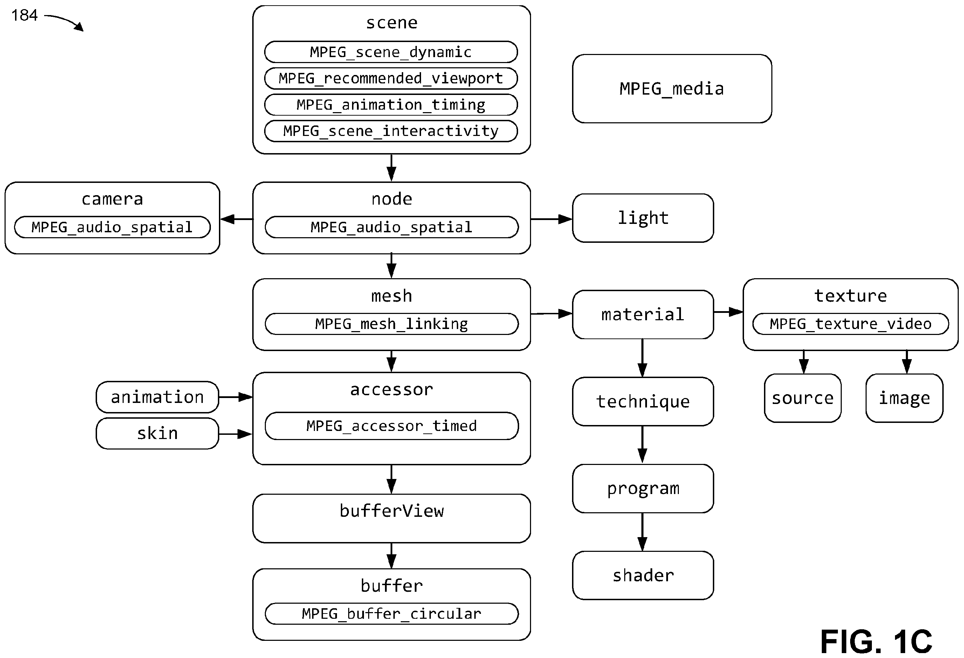

FIG. 1C is a system diagram illustrating an example set of interfaces for an MPEG-I node hierarchy 184 supporting elements of scene interactivity according to some embodiments.

The embodiments described herein are not limited to any particular type or structure of XR display device.

This application describes how to encode 3D Gaussian splatting representation in a scene description format (such as gITF format, which is described in *Khronos gITF Specification for the efficient transmission and loading of 3D scenes and models by engines and applications,* KHRONOS, *available at:* khronos<dot>org/gltf/ (*"Khronos gITF Specification"*))*.*

According to Information technology - Coded representation of immersive media - Part 14: Scene description for MPEG media: FDIS comments, ISO/IEC DIS 23090-14:2021 (E) ("ISO/IEC DIS 23090-14"), a gITF format is compliant with MPEG-I SD, for illustration purposes, but the principles may be applied to other formats and contexts.

The current MPEG-I Scene Description (SD) format (see *ISO*/*IEC DIS 23090-14*) allows for the storage of several digital representations, such as 3D meshes or 3D point clouds, but does not allow the storage of 3D Gaussian splatting models, according to Kerbl, Bernhard, et al., 3D Gaussian Splatting for Real-Time Radiance Field Rendering, ACM TOG (2023) ("*Kerbl"*).

The Gaussian Splatting 3D process (see *Kerbl*) is a method to render a 3D scene in real time from a few images taken from several viewpoints. The 3D space is defined as a set of Gaussians, and the parameters of each Gaussian are calculated using machine learning. Each Gaussian is described by the following parameters: position, covariance, color, and alpha. The position parameter indicates where the Gaussian is located (e.g., X, Y, Z coordinates). The covariance parameter indicates how the Gaussian is stretched/scaled (e.g., a 3x3 matrix). The color parameter indicates the color of the Gaussian (e.g., RGB values). The alpha parameter indicates the transparency of the Gaussian (e.g., α). In practice, several Gaussians may be drawn at once to represent a scene.

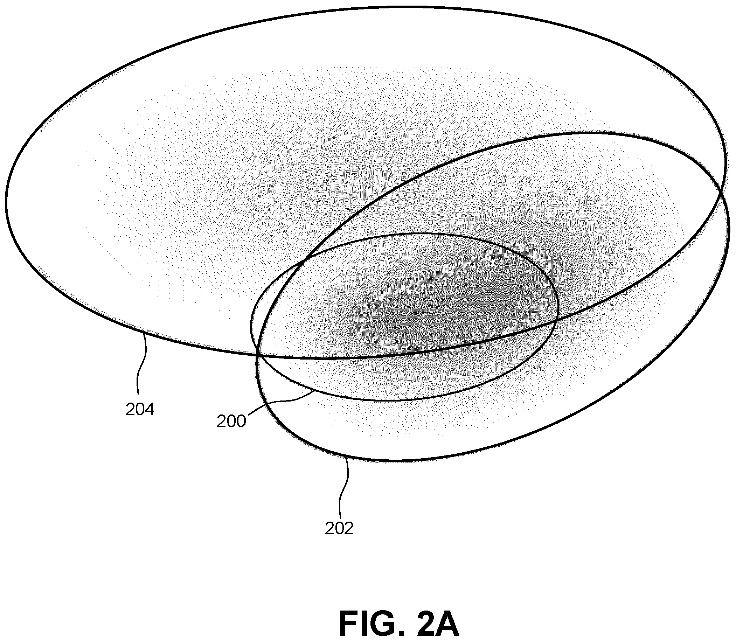

FIG. 2A is a schematic illustration showing an example set of Gaussians. Each of 3 Gaussians 200, 202, 204 is centered in the corresponding oval. FIG. 2A is an illustration of a set of 3D Gaussians. Several Gaussians may be drawn at one to represent a scene.

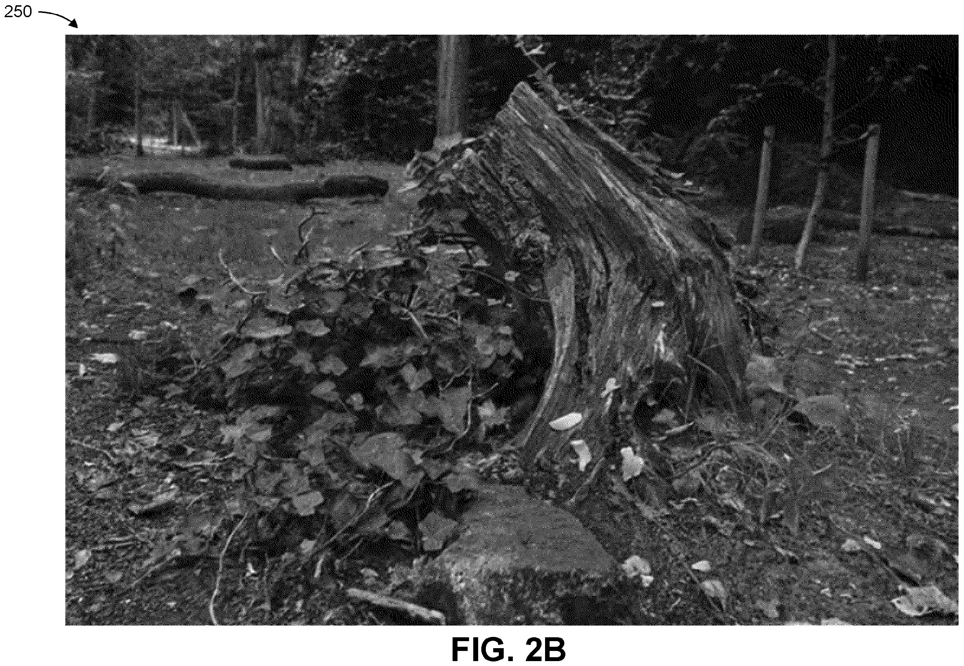

FIG. 2B is an illustration showing an example rendering of a sample scene. FIG. 2B shows a rendering of an example scene 250. FIG. 2B is an example of an image rendered with 3D Gaussians. For rendering, Gaussians may be used through rasterization. Gaussians are computed from a point cloud obtained from an input image set. Each point is converted into a Gaussian. These Gaussians may be rasterized to render an image.

Consider an application relying on MPEG-I-SD (see *ISO*/*IEC DIS 23090-14*) that allows users to represent 3D scenes and interact with those scenes. Users may want to enrich the current scene or create a new one based on 3D Gaussians rendering. As understood of this writing, a problem to be solved is that there is no standardized way for an application to represent and encode such 3D Gaussian information. Only 3D meshes and 3D colored point clouds are supported.

The format described herein follows the gITF format, which is described in the *Khronos gITF Specification,* and is compatible with the recent MPEG-I-SD effort to extend gITF with MPEG-I SD extensions. However, its meaning and use are generic, and, for some embodiments, the paradigm may be coded in other formats (such as XML and USD, among others).

For example, the gITF specifications may be modified to: (1) extend mesh.primitive.mode with a new mode defined as 7 GAUSSIAN, (2) extend mesh.primitive.attributes with "COVARIANCE" (3x3 matrix of float), and/or (3) extend mesh.primitive.attributes with an extras extension "COVARIANCE" (3x3 matrix of float).

In gITF, a point cloud may be represented as a mesh with no connectivity. As described in the *Khronos gITF Specification:*
"[M]eshes are defined as arrays of primitives. Primitives correspond to the data required for GPU draw calls. Primitives specify one or more attributes, corresponding to the vertex attributes used in the draw calls. Indexed primitives also define an indices property. Attributes and indices are defined as references to accessors containing corresponding data."

Each attribute is defined as a property of the attributes object. The name of the property corresponds to an enumerated value identifying the vertex attribute, such as POSITION. The value of the property is the index of an accessor containing the data.

Currently, the gITF specification defines the following attribute semantics: POSITION, NORMAL, TANGENT, TEXCOORD_n, COLOR_n, JOINTS_n, and WEIGHTS_n. The two attributes that may be used in supporting 3D Gaussians are shown in Table 1.

**Table 1.**

| **Name** | **Accessor Type(s)** | **Component Type(s)** | **Description** | **New** |
|---|---|---|---|---|
| POSITION | VEC3 | *float* | Unitless XYZ Gaussian positions | No |
| COLOR_n | VEC4 | *float* | Spherical Harmonic (SH) Gaussian color linear multipliers | No |

A new attribute must be added to encode Gaussian information. Table 2 shows an attribute that may be added. This new attribute, COVARIANCE, represents the rotation and scale to apply to the Gaussians.

**Table 2.**

| **Name** | **Accessor Type(s)** | **Component Type(s)** | **Description** | **New** |
|---|---|---|---|---|
| COVARIANCE | MAT3 | *float* | Gaussian Covariance Matrix | ✔ Yes |

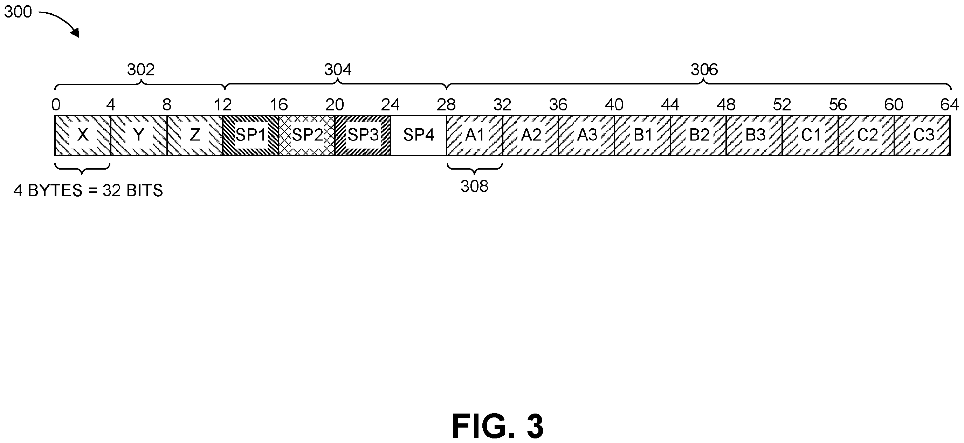

FIG. 3 is a bitfield diagram showing an example encoding of a Gaussian in a buffer according to some embodiments. FIG. 3 shows the encoding of a Gaussian in a buffer. All of the float-type parameters of Tables 1 and 2 are assumed to be coded using 32 bits (4 bytes). Using the paradigm shown in FIG. 3, a single Gaussian is represented using 64 bytes.

The POSITION parameter may be coded with 12 bytes (3 coordinates x 4 bytes/coordinate). In FIG. 3, the POSITION parameter 302 is shown as occupying bytes 0 to 11.

The COLOR_n parameter may be coded with 16 bytes (4 color values x 4 bytes/color value). The COLOR_n parameter may correspond to Spherical Harmonic (SH) coefficient values. In FIG. 3, the COLOR_n parameter 304 is shown as occupying bytes 12 to 27. For some embodiments, the COLOR_n parameter may be declared as a property of an EXT_lights_based object, which is defined in the webpage *EXT_lighfs_image_based*, GITHUB, *available at:* github<dot>com/KhronosGroup/gITF/tree/main/extensions/2<dot>0/Vendor/EXT lights_image based.

The COVARIANCE parameter may be coded with 36 bytes (9 values x 4 bytes/value). In FIG. 3, the COVARIANCE parameter 306 is shown as occupying bytes 28 to 63. The "64" shown in FIG. 3 would belong to the next byte, which is not shown in FIG. 3. The 9 terms of a 3x3 covariance matrix represent the 9 values of the COVARIANCE parameter. In bytes 28 to 63, the letters A, B, and C indicate the row, and the numbers 1, 2, and 3 indicate the column of the 3x3 covariance matrix. For some embodiments, the COVARIANCE parameter may be represented using a rotation matrix R and a scaling vector S.

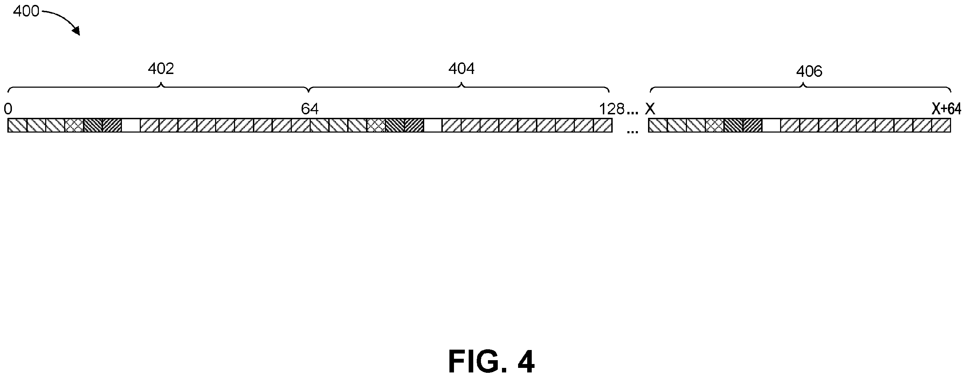

FIG. 4 is a bitfield diagram showing an example encoding of multiple Gaussians in a buffer according to some embodiments. FIG. 4 shows a bitfield 400 in which multiple Gaussians are encoded in a row.

Since the encoding of Gaussians is not supported in gITF, a new mode for the topology type of primitive to render must be defined. The primitive mesh.primitive.attributes may be extended with a new mode to represent Gaussians as described in Table 3.

**Table 3.**

| | | |
|---|---|---|
| mesh. primitive. mode | | |
| The topology type of primitives to render. | | |
| | • **Type:** integer | |
| | • **Required:** No, default: 4 | |
| | • **Allowed values:** | |
| | | ∘ 0 POINTS |
| | | ∘ 1 LINES |
| | | ∘ 2 LINE_LOOP |
| | | ∘ 3 LINE_STRIP |
| | | ∘ 4 TRIANGLES |
| | | ∘ 5 TRIANGLE_STRIP |
| | | ∘ 6 TRIANGLE_FAN |
| | | ∘ 7 GAUSSIANS |

A new attribute for Gaussian representation is shown in Table 3 for a mode value equal to 7.

Two different examples are described below for handling the new COVARIANCE parameter: (1) add a new attribute in glTF primitives; (2) an extension case with adding the new attribute to an "extra" of the "primitives"

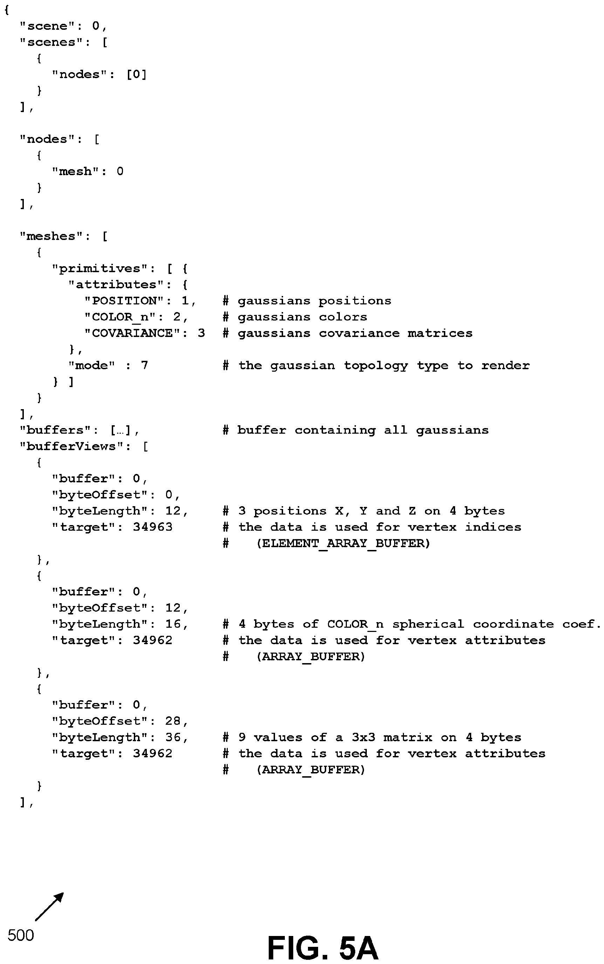

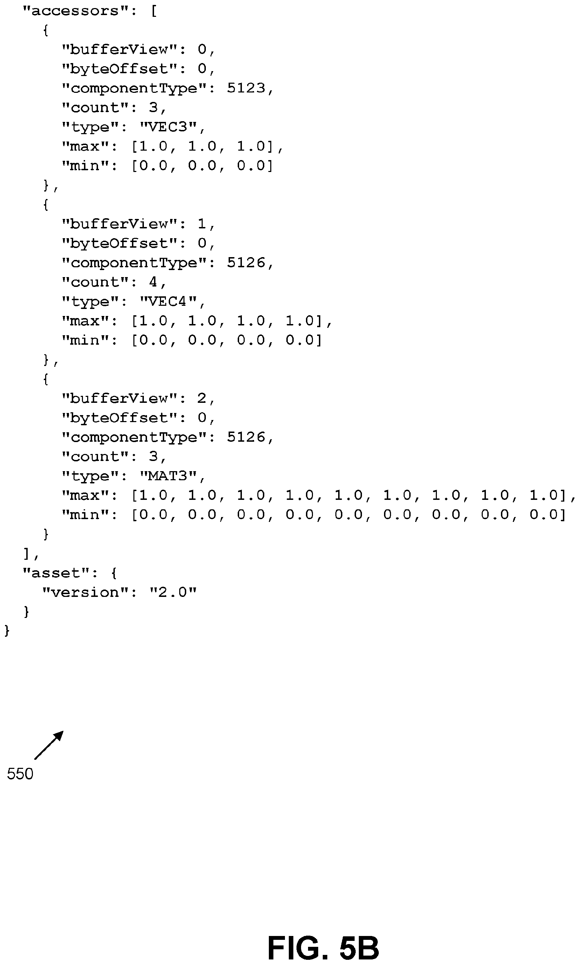

FIGs. 5A-5B form a code listing of an example data structure that includes a covariance attribute according to some embodiments. In this example data structure 500, 550, the COVARIANCE attribute is added inside the *attributes* section within the *primitives* portion of the *meshes* data structure element. In the example of FIGs. 5A and 5B, the COVARIANCE attribute has been added to the attributes of mesh primitives without the use of anything extra and without the use of an extension. FIGs. 5A and 5B support a minimal but complete gITF asset, for a single Gaussian.

The example data structure of FIGs. 5A and 5B corresponds to the bitfield diagram FIG. 3. The attributes element contains three attributes: POSITION, COLOR_n, and COVARIANCE. The attributes element is used with the buffers and bufferViews elements of the data structure. The POSITION attribute has a value of 1 and corresponds to the first sub-section of the bufferViews element. The COLOR_n attribute has a value of 2 and corresponds to the second sub-section of the bufferViews element. The COVARIANCE attribute has a value of 3 and corresponds to the third sub-section of the bufferViews element.

The mode element has a value of 7, which is the mode value for Gaussians. This value corresponds to the description above regarding Table 3.

The first sub-section of the bufferViews element corresponds to bytes 0 to 11 of bitfield diagram of FIG. 3. This range of bytes is indicated by the byte Offset of 0 and the byteLength of 12. The X, Y, and Z coordinates are each given 4 bytes, hence 12 bytes total. These bytes correspond to the POSITION parameter of the first Gaussian. Hence, the "buffer" parameter is 0.

The second sub-section of the bufferViews element corresponds to bytes 12 to 27 of bitfield diagram of FIG. 3. This range of bytes is indicated by the byteOffset of 12 and the byteLength of 16. The R, G, B, and alpha (A or α) values are each given 4 bytes, hence 16 bytes total. These bytes correspond to the COLOR_n parameter of the first Gaussian. Hence, the "buffer" parameter is 0.

The third sub-section of the bufferViews element corresponds to bytes 28 to 63 of bitfield diagram of FIG. 3. This range of bytes is indicated by the byteOffset of 28 and the byteLength of 36. Each covariance value in the 3x3 matrix of covariance values is given 4 bytes, hence 36 bytes total. These bytes correspond to the COVARIANCE parameter of the first Gaussian. Hence, the "buffer" parameter is 0.

The first sub-section of the accessors element corresponds to the POSITION parameter and the first sub-section of the bufferView element. Hence, the bufferView parameter is 0.

The second sub-section of the accessors element corresponds to the COLOR_n parameter and the second sub-section of the bufferView element. Hence, the bufferView parameter is 1.

The third sub-section of the accessors element corresponds to the COVARIANCE parameter and the third sub-section of the bufferView element. Hence, the bufferView parameter is 2.

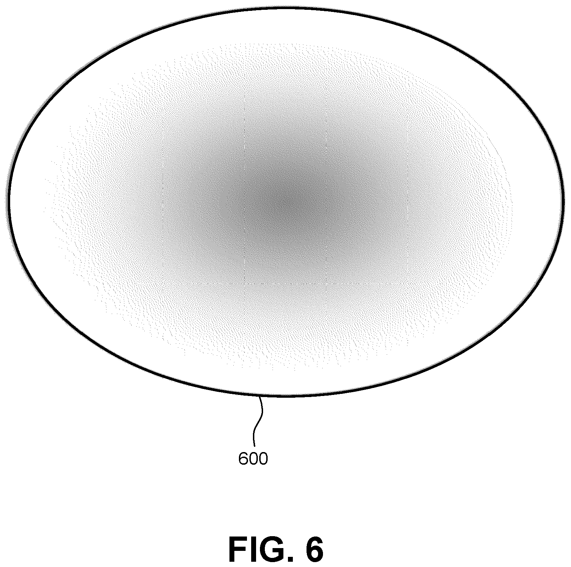

FIG. 6 is a schematic illustration showing an example of an encoded Gaussian according to some embodiments. The encoded Gaussian shape 600 is centered in the oval. A single encoded Gaussian is shown as encoded using the glTF data structure of FIGs. 5A and 5B.

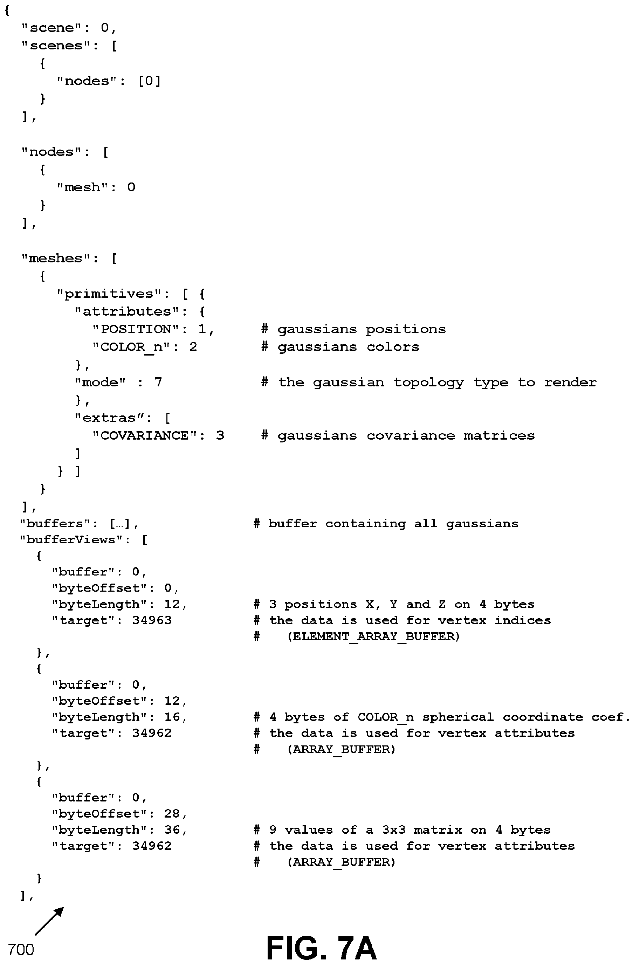

FIGs. 7A-7B form a code listing of an example data structure that includes a covariance attribute according to some embodiments. In the following example code listing 700, 750, the COVARIANCE attribute has been added via the *extras* section to use with the separate *attributes* section within the *primitives* portion of the *meshes* data structure element. The buffers, bufferviews, and accessors data structure elements are identical to the corresponding sections of FIGs. 5A and 5B. The data structure of FIGs. 7A-7B is an example extension.

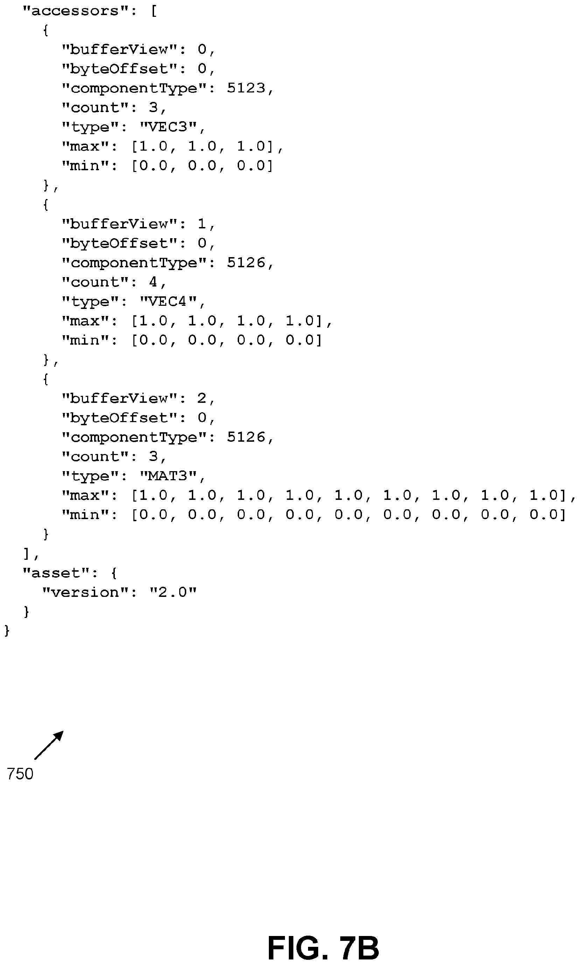

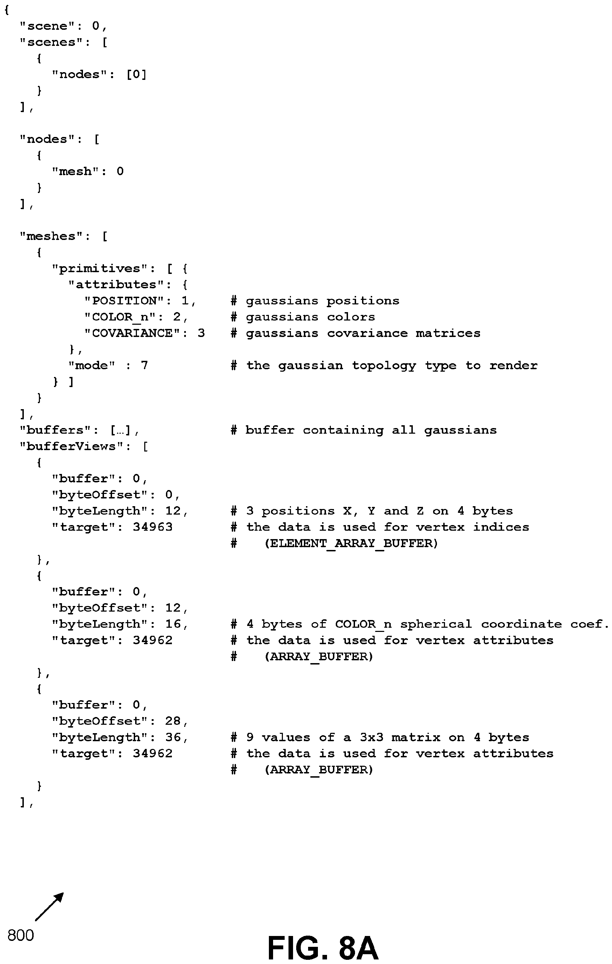

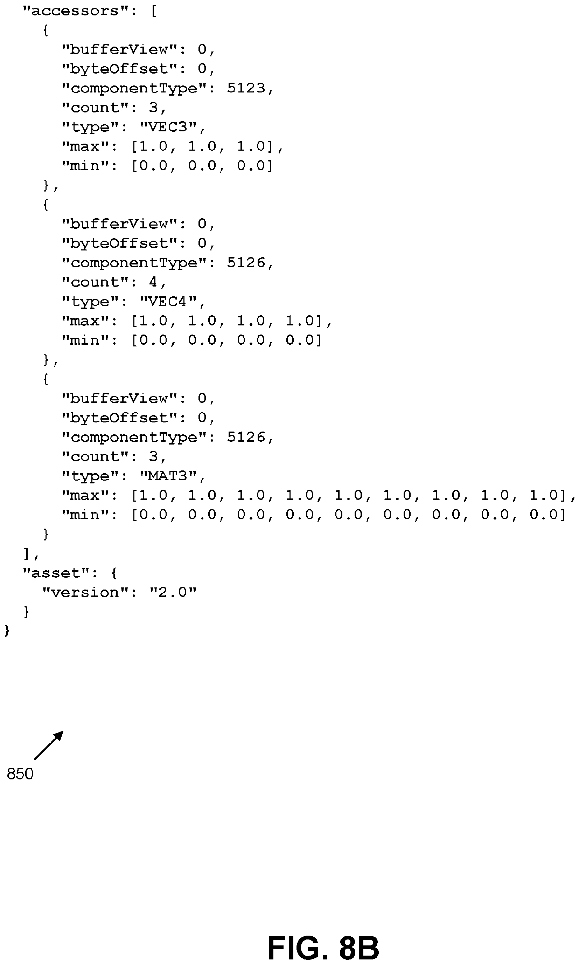

FIGs. 8A-8B form a code listing of an example data structure that includes a covariance attribute according to some embodiments. In this example data structure 800, 850, the COVARIANCE attribute is added inside the *attributes* section within the *primitives* portion of the *meshes* data structure element. The buffers, bufferviews, and accessors data structure elements are identical to the corresponding sections of FIGs. 5A and 5B (and FIGs. 7A and 7B).

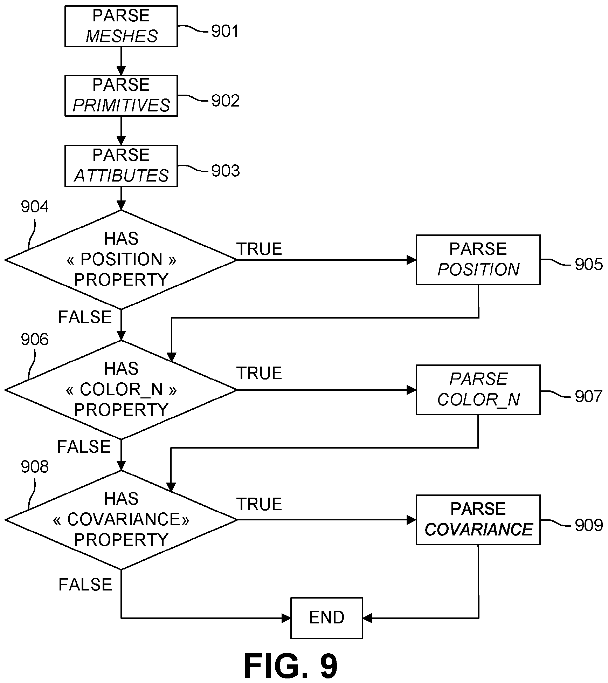

FIG. 9 is a flowchart illustrating an example process for processing attributes according to some embodiments. The processing model of FIG. 9 may be applied to process attributes without the use of an "extras" extension section.

The parse meshes block 901 is performed, e.g., every time a *meshes* element is processed in a glTF file. The parse primitives block 902 parses the *primitives* property. For some embodiments, if the mandatory *primitives* property is not present, an error is generated. The parse attributes block 903 parses the *attributes* property. For some embodiments, if the mandatory *attributes* property is not present, an error is generated.

A determination 904 is made regarding the existence of the *POSITION* property. If the *POSITION* property exists in the data structure, the parse position block 905 parses the *POSITION* property. A determination 906 is made regarding the existence of the *COLOR_n* property. If the *COLOR_n* property exists in the data structure, the parse position block 907 parses the *COLOR_n* property. A determination 908 is made regarding the existence of the *COVARIANCE* property. If the COVARIANCE property exists in the data structure, the parse position block 909 parses the COVARIANCE property. The code flow then exits and/or ends.

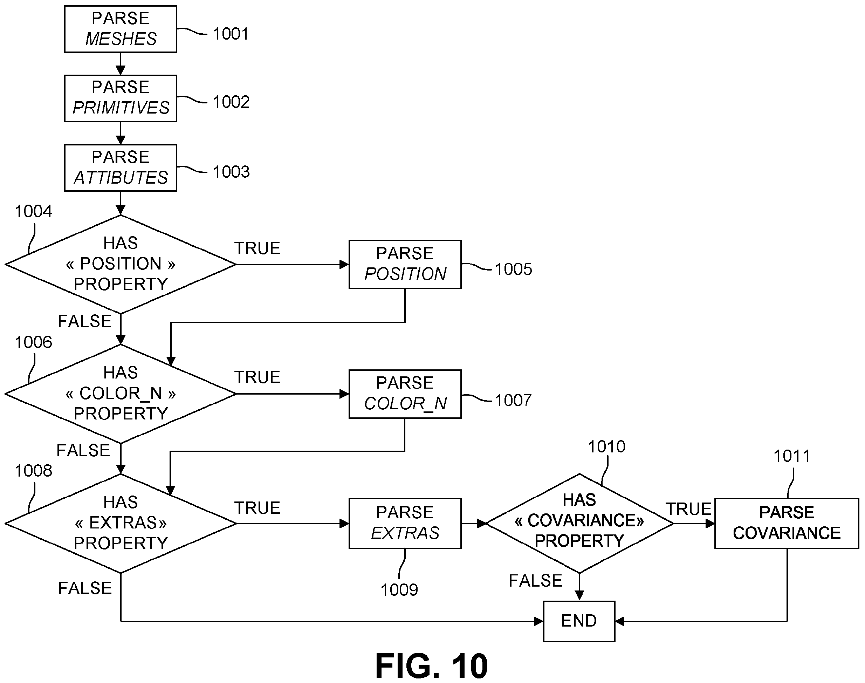

FIG. 10 is a flowchart illustrating an example process for processing attributes according to some embodiments. The processing model of FIG. 10 may be applied to process attributes, including those properties that may appear in an "extras" extension section.

The parse meshes block 1001 is performed, e.g., every time a *meshes* element is processed in a glTF file. The parse primitives block 1002 parses the *primitives* property. For some embodiments, if the mandatory *primitives* property is not present, an error is generated. The parse attributes block 1003 parses the *attributes* property. For some embodiments, if the mandatory *attributes* property is not present, an error is generated.

A determination 1004 is made regarding the existence of the *POSITION* property. If the *POSITION* property exists in the data structure, the parse position block 1005 parses the *POSITION* property. A determination 1006 is made regarding the existence of the *COLOR_n* property. If the *COLOR_n* property exists in the data structure, the parse position block 1007 parses the *COLOR_n* property.

A determination 1008 is made regarding the existence of the extras property. If the *extras* property exists in the data structure, the parse position block 1009 parses the extras property. Otherwise, the code flow exits and/or ends. A determination 1010 is made regarding the existence of the *COVARIANCE* property. If the *COVARIANCE* property exists in the data structure, the parse position block 1011 parses the *COVARIANCE* property. The code flow then exits and/or ends.

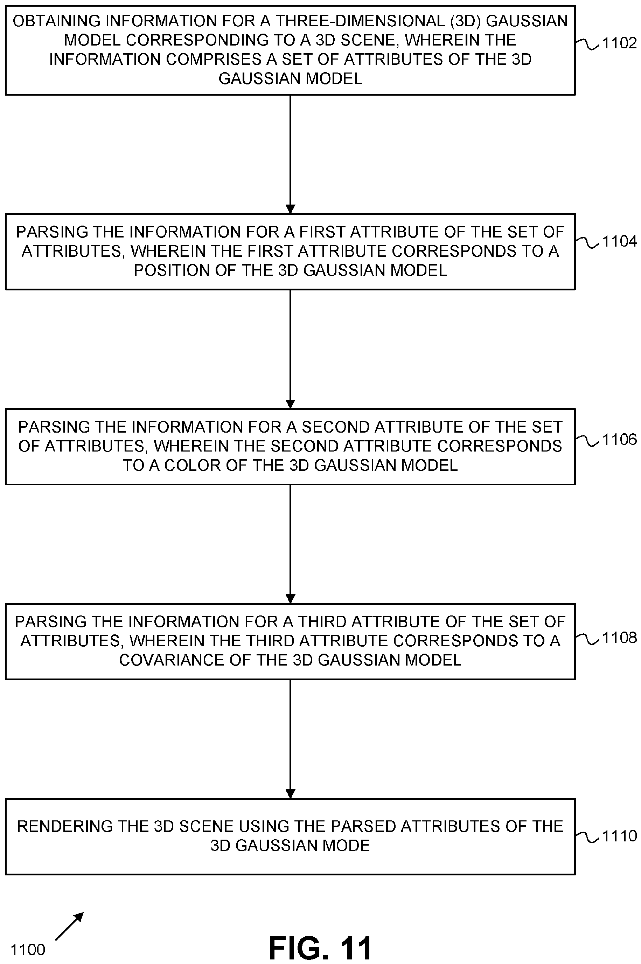

FIG. 11 is a flowchart illustrating an example process for parsing and rendering a 3D Gaussian model according to some embodiments. For some embodiments, an example process 1100 may include obtaining 1102 information for a three-dimensional (3D) Gaussian model corresponding to a 3D scene, wherein the information comprises a set of attributes of the 3D Gaussian model. For some embodiments, the example process 1100 may further include parsing 1104 the information for a first attribute of the set of attributes, wherein the first attribute corresponds to a position of the 3D Gaussian model. For some embodiments, the example process 1100 may further include parsing 1106 the information for a second attribute of the set of attributes, wherein the second attribute corresponds to a color of the 3D Gaussian model. For some embodiments, the example process 1100 may further include parsing 1108 the information for a third attribute of the set of attributes, wherein the third attribute corresponds to a covariance of the 3D Gaussian model. For some embodiments, the example process 1100 may further include rendering 1110 the 3D scene using the parsed attributes of the 3D Gaussian model.

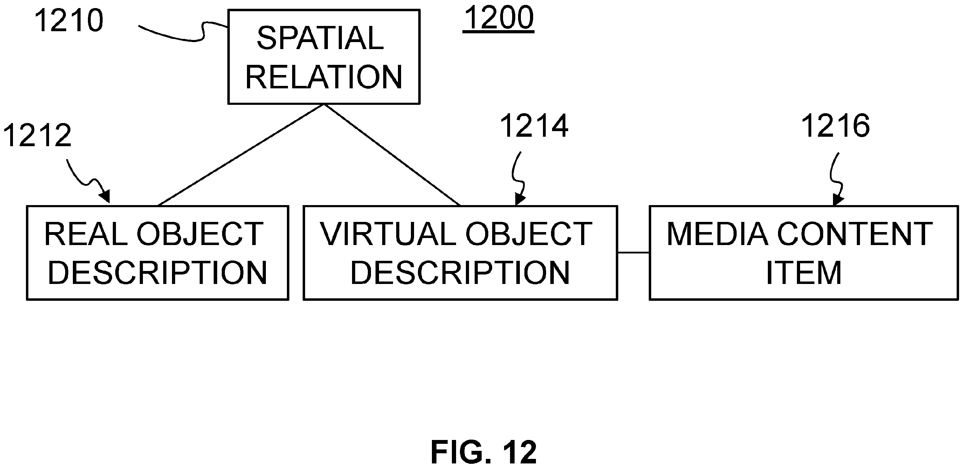

FIG. 12 is a schematic plan view illustrating example relationships of extended reality scene description objects according to some embodiments. In this example, the scene graph 1200 includes a description of a real object 1212, for example 'plane horizontal surface' (that can be a table or the floor or a plate) and a description of a virtual object 1214, for example an animation of a walking character. Scene graph node 1214 is associated with a media content item 1216 that is the encoding of data used to render and display the walking character (for example as a textured animated 3D mesh). Scene graph 1200 also includes a node 1210 that is a description of the spatial relation between the real object described in node 1212 and the virtual object described in node 1214. In this example, node 1210 describes a spatial relation to make the character walk on the plane surface. When the XR application is started, media content item 1216 is loaded, rendered and buffered to be displayed when triggered. When a plane surface is detected in the real environment by sensors (or a camera for some embodiments), the application displays the buffered media content item as described in node 1210. The timing is managed by the application according to features detected in the real environment and to the timing of the animation. A node of a scene graph may also include no description and only play a role of a parent for child nodes.

XR applications are various and may apply to different context and real or virtual environments. For example, in an industrial XR application, a virtual 3D content item (e.g. a piece A of an engine) is displayed when a reference object (piece B of an engine) is detected in the real environment by a camera rigged on a head mounted display device. The 3D content item is positioned in the real-world with a position and a scale defined relatively to the detected reference object.

For example, in an XR application for interior design, a 3D model of a furniture is displayed when a given image from the catalog is detected in the input camera view. The 3D content is positioned in the real-world with a position and scale which is defined relatively to the detected reference image. In another application, some audio file might start playing when the user enters an area which is close to a church (being real or virtually rendered in the extended real environment). In another example, an ad jingle file may be played when the user sees a can of a given soda in the real environment. In an outdoor gaming application, various virtual characters may appear, depending on the semantics of the scenery which is observed by the user. For example, birds characters are suitable for trees, so if the sensors of the XR device detect real objects described by a semantic label 'tree', birds can be added flying around the trees. In a companion application implemented by smart glasses, a car noise may be launched in the user's headset when a car is detected within the field of view of the user camera, in order to warn him of the potential danger; Furthermore, the sound may be spatialized in order to make it arrive from the direction where the car was detected.

An XR application may also augment a video content rather than a real environment. The video is displayed on a rendering device and virtual objects described in the node tree are overlaid when timed events are detected in the video. In such a context, the node tree includes only virtual objects descriptions.

Example embodiments are described with reference to the scope of the MPEG-I Scene Description framework using the Khronos glTF extension mechanism, which supports additional scene description features, such as a node tree. However, the principles described herein are not limited to a particular scene description framework.

In an example embodiment, the glTF scene description is extended to support interactivity. The interactivity extension applies at the glTF scene level and is called MPEG_scene_interactivity. See the document ISO/IEC 23090-14, *CDAM 2: Support for Haptics, Augmented Reality, Avatars, Interactivity, MPEG-I Audio, and Lighting,* ISO/IEC JTC 1/SC 29/WG 03 N00797 (*"MPEG Extension"*)*.*

Extended reality (XR) is a technology enabling interactive experiences where the real-world environment and/or a video content is enhanced by virtual content, which can be defined across multiple sensory modalities, including visual, auditory, haptic, etc. During runtime of the application, the virtual content (3D content or audio/video file for example) is rendered in real-time in a way which is consistent with the user context (environment, point of view, device, etc.). Scene graphs (such as the one proposed by Khronos / glTF and its extensions defined in MPEG Scene Description format or Apple / USDZ for instance) are a possible way to represent the content to be rendered. They combine a declarative description of the scene structure linking real-environment objects and virtual objects on one hand, and binary representations of the virtual content on the other hand.

An example apparatus in accordance with some embodiments may include at least one processor configured to perform any one of the methods described within this application. An example apparatus in accordance with some embodiments may include a computer-readable medium storing instructions for causing one or more processors to perform any one of the methods described within this application. An example apparatus in accordance with some embodiments may include at least one processor and at least one non-transitory computer-readable medium storing instructions for causing the at least one processor to perform any one of the methods described within this application. An example signal in accordance with some embodiments may include a bitstream generated according to any one of the methods described within this application.

While the methods and systems in accordance with some embodiments are generally discussed in context of extended reality (XR), some embodiments may be applied to any XR contexts such as, e.g., virtual reality (VR) / mixed reality (MR) / augmented reality (AR) contexts. Also, although the term "head mounted display (HMD)" is used herein in accordance with some embodiments, some embodiments may be applied to a wearable device (which may or may not be attached to the head) capable of, e.g., XR, VR, AR, and/or MR for some embodiments.

An example method in accordance with some embodiments may include: obtaining information for a three-dimensional (3D) Gaussian model corresponding to a 3D scene, wherein the information comprises a set of attributes of the 3D Gaussian model; parsing the information for a first attribute of the set of attributes, wherein the first attribute corresponds to a position of the 3D Gaussian model; parsing the information for a second attribute of the set of attributes, wherein the second attribute corresponds to a color of the 3D Gaussian model; parsing the information for a third attribute of the set of attributes, wherein the third attribute corresponds to a covariance of the 3D Gaussian model; and rendering the 3D scene using the parsed attributes of the 3D Gaussian model. In some embodiments, the information is encoded into a bitstream. In some embodiments, the information is decoded from a bitstream.

For some embodiments of the example method, the first attribute corresponds to x, y, and z positions in space.

For some embodiments of the example method, the first attribute comprises at least 12 bytes of position data in the obtained information.

For some embodiments of the example method, the second attribute corresponds to color values associated with the 3D Gaussian model.

For some embodiments of the example method, the color values are spherical harmonic coefficients associated with the 3D Gaussian model.

For some embodiments of the example method, the second attribute comprises a property of a glTF extension-based object.

For some embodiments of the example method, the second attribute comprises a transparency value associated with the 3D Gaussian.

For some embodiments of the example method, the third attribute comprises a 3x3 matrix of covariance values associated with the 3D Gaussian.

For some embodiments of the example method, the third attribute comprises at least 36 bytes of covariance data in the obtained information.

For some embodiments of the example method, the obtained information corresponds to a glTF data structure.

For some embodiments of the example method, the covariance attribute corresponding to the third attribute is stored within a glTF primitive data structure element.

For some embodiments of the example method, the covariance attribute corresponding to the third attribute is stored within an extension element that extends a glTF primitive data structure element.

For some embodiments of the example method, the obtained information comprises a mode primitive data structure element.

For some embodiments of the example method, the mode primitive data structure element indicates that the obtained information corresponds to 3D Gaussian model data.

An example apparatus in accordance with some embodiments may include: a processor; and a non-transitory computer-readable medium storing instructions operative, when executed by the processor, to cause the apparatus to perform any one of the methods listed above.

This disclosure describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the disclosure or scope of those aspects. Indeed, all of the different aspects can be combined and interchanged to provide further aspects. Moreover, the aspects can be combined and interchanged with aspects described in earlier filings as well.

The aspects described and contemplated in this disclosure can be implemented in many different forms. While some embodiments are illustrated specifically, other embodiments are contemplated, and the discussion of particular embodiments does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

In the present disclosure, the terms "reconstructed" and "decoded" may be used interchangeably, the terms "pixel" and "sample" may be used interchangeably, the terms "image," "picture" and "frame" may be used interchangeably. Usually, but not necessarily, the term "reconstructed" is used at the encoder side while "decoded" is used at the decoder side.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

Various numeric values may be used in the present disclosure, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this disclosure are not necessarily all referring to the same embodiment.

Additionally, this disclosure may refer to "determining" various pieces of information. Determining the information can include one or more of, for example, estimating the information, calculating the information, predicting the information, or retrieving the information from memory.

Further, this disclosure may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this disclosure may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Also, as used herein, the word "signal" refers to, among other things, indicating something to a corresponding decoder. For example, in certain embodiments the encoder signals a particular one of a plurality of parameters for region-based filter parameter selection for de-artifact filtering. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

We describe a number of embodiments. Features of these embodiments can be provided alone or in any combination, across various claim categories and types. Further, embodiments can include one or more of the following features, devices, or aspects, alone or in any combination, across various claim categories and types:
- A bitstream or signal that includes one or more of the described syntax elements, or variations thereof.
- A bitstream or signal that includes syntax conveying information generated according to any of the embodiments described.
- Creating and/or transmitting and/or receiving and/or decoding according to any of the embodiments described.
- A method, process, apparatus, medium storing instructions, medium storing data, or signal according to any of the embodiments described.
- A TV, set-top box, cell phone, tablet, or other electronic device that performs adaptation of filter parameters according to any of the embodiments described.
- A TV, set-top box, cell phone, tablet, or other electronic device that performs adaptation of filter parameters according to any of the embodiments described, and that displays (e.g. using a monitor, screen, or other type of display) a resulting image.
- A TV, set-top box, cell phone, tablet, or other electronic device that selects (e.g. using a tuner) a channel to receive a signal including an encoded image, and performs adaptation of filter parameters according to any of the embodiments described.
- A TV, set-top box, cell phone, tablet, or other electronic device that receives (e.g. using an antenna) a signal over the air that includes an encoded image, and performs adaptation of filter parameters according to any of the embodiments described.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method comprising:
obtaining information for a three-dimensional (3D) Gaussian model corresponding to a 3D scene,
wherein the information comprises a set of attributes of the 3D Gaussian model;
parsing the information for a first attribute of the set of attributes,
wherein the first attribute corresponds to a position of the 3D Gaussian model;
parsing the information for a second attribute of the set of attributes,
wherein the second attribute corresponds to a color of the 3D Gaussian model;
parsing the information for a third attribute of the set of attributes,
wherein the third attribute corresponds to a covariance of the 3D Gaussian model; and
rendering the 3D scene using the parsed attributes of the 3D Gaussian model.

2. The method of claim 1, wherein the first attribute corresponds to x, y, and z positions in space.

3. The method of any one of claims 1-2, wherein the first attribute comprises at least 12 bytes of position data in the obtained information.

4. The method of any one of claims 1-3, wherein the second attribute corresponds to color values associated with the 3D Gaussian model.

5. The method of claim 4, wherein the color values are spherical harmonic coefficients associated with the 3D Gaussian model.

6. The method of any one of claims 1-5, wherein the second attribute comprises a property of a glTF extension-based object.

7. The method of any one of claims 1-6, wherein the second attribute comprises a transparency value associated with the 3D Gaussian.

8. The method of any one of claims 1-7, wherein the third attribute comprises a 3x3 matrix of covariance values associated with the 3D Gaussian.

9. The method of any one of claims 1-8, wherein the third attribute comprises at least 36 bytes of covariance data in the obtained information.

10. The method of any one of claims 1-9, wherein the obtained information corresponds to a glTF data structure.

11. The method of any one of claims 1-10, wherein the covariance attribute corresponding to the third attribute is stored within a glTF primitive data structure element.

12. The method of any one of claims 1-10, wherein the covariance attribute corresponding to the third attribute is stored within an extension element that extends a glTF primitive data structure element.

13. The method of any one of claims 1-12, wherein the obtained information comprises a mode primitive data structure element.

14. The method of claim 13, wherein the mode primitive data structure element indicates that the obtained information corresponds to 3D Gaussian model data.

15. An apparatus comprising:
a processor; and
a non-transitory computer-readable medium storing instructions operative, when executed by the processor, to cause the apparatus to perform the method of any one of claims 1 through 14.
